# EUROPÄISCHE PATENTSCHRIFT

(11) **EP 2 855 918 B1**
(45) Veröffentlichungstag und Bekanntmachung des Hinweises auf die Patenterteilung: **27.04.2016**
(21) Anmeldenummer: 13726477.6
(22) Anmeldetag: 24.05.2013
(51) Int. Cl.: F02D 33/00, F02M 55/02, F02M 61/14, F02M 61/16, F02M 69/46

(54) **VORRICHTUNG ZUM ZUMESSEN VON KRAFTSTOFF**
DEVICE FOR METERING FUEL
DISPOSITIF DE DOSAGE DE CARBURANT

(30) Priorität: 04.06.2012 DE 102012209421
(43) Veröffentlichungstag der Anmeldung: 08.04.2015
(73) Patentinhaber: Robert Bosch GmbH, 70442 Stuttgart (DE)
(72) Erfinder: WOLFF, Guenter, 71701 Schwieberdingen (DE); FISCHER, Ulrich, 71254 Ditzingen (DE); SCHEFFEL, Martin, 71665 Vaihingen (DE); REINHARDT, Wilhelm, 75443 Oetisheim (DE)
(86) Internationale Anmeldenummer: PCT/EP2013/060755
(87) Internationale Veröffentlichungsnummer: WO 2013/182437

(56) Entgegenhaltungen:
- EP-A1- 2 246 555
- WO-A1-2006/092427
- DE-A1-102006 017 900
- DE-B4- 19 758 817

## Beschreibung

### Stand der Technik

Die Erfindung geht aus von einer Vorrichtung zum Zumessen von Kraftstoff in Brennkraftmaschinen nach dem Oberbegriff des Anspruchs 1. Unter Kraftstoff wird in diesem Zusammenhang ein fluider, also flüssiger oder gasförmiger Brennstoff verstanden, dessen chemische Energie durch Verbrennen in einer Brennkraftmaschine, wie Otto-, Diesel- oder Gasmotor, in Antriebskraft umgewandelt wird.

Bei einer bekannten Vorrichtung zur Kraftstoffeinspritzung in Brennkraftmaschinen (DE 197 58 817 B4) ist am Kraftstoffverteiler eine die Anschlussöffnung umschließende Anschlusstasse angeformt, in die eine Zwischenhülse mit einem Zulaufabschnitt eingesetzt und mittels eines O-Rings gegen die Tassenwand abgedichtet ist. Die Zwischenhülse ist mittels eines an der Zwischenhülse und an der Anschlusstasse formschlüssig angreifenden Sicherungselements am Kraftstoffverteiler befestigt. Das Ventil zum Zumessen des Kraftstoffs ist mit seinem Anschlussstutzen in einen erweiterten Abschnitt der Zwischenhülse eingesetzt und mittels eines O-Rings gegen die Hülsenwand abgedichtet. An dem Kraftstoffverteiler und am Ventil ist je eine Federaufnahme ausgebildet, zwischen denen sich eine Druckfeder abstützt. Nach Einsetzen des Ventils in eine Zylinderkopfbohrung im Zylinderkopf der Brennkraftmaschine und Befestigen des Kraftstoffverteilers am Zylinderkopf legt die bei der Montage gespannte Druckfeder das Ventil in der Zylinderbohrung kraftschlüssig fest.

### Offenbarung der Erfindung

Die erfindungsgemäße Vorrichtung mit den Merkmalen des Anspruchs 1 hat den Vorteil, dass zwischen Ventil und Kraftstoffverteiler im Ansetzbereich von Anschlussstutzen und Anströmöffnung eine Abdichtung hergestellt ist, die auch bei extrem hohen Drücken zuverlässig dichtet und eine lange Standzeit aufweist. Durch die Positionierung des den Anpressdruck zwischen Anschlusskopf und Sitzfläche an der Abströmöffnung herstellenden Flanschelements in dem am Ventil festgelegten Aufnahmeglied kann bei der Montage das Gewindeloch durch die mindestens eine am Kraftstoffverteiler festgelegte Spannschraube "blind" gefunden und so die Montage vereinfacht und automatisiert werden. Wahlweise kann dabei eine Vormontage der Ventile und des Kraftstoffverteilers oder eine Montage des Kraftstoffverteilers an die bereits in den Zylinderkopf der Brennkraftmaschine eingesetzten Ventile vorgenommen werden. Nach der Montage von Kraftstoffverteiler und Ventilen verspannt das von der mindestens einen Spannschraube am Kraftstoffverteiler festgelegte Flanschelement den Anschlusskopf auf der Sitzfläche am Kraftstoffverteiler, womit das Aufnahmeglied unbelastet ist. An das Aufnahmeglied müssen daher keine gesonderten Festigkeitsbedingungen gestellt werden.

Durch die in den weiteren Ansprüchen aufgeführten Maßnahmen sind vorteilhafte Weiterbildungen und Verbesserungen der im Anspruch 1 angegebenen Vorrichtung möglich.

Gemäß einer vorteilhaften Ausführungsform der Erfindung ist das Flanschelement ein Flachteil und weist das Aufnahmeglied mindestens eine Auflagefläche für das flache Flanschelement und mehrere, das Flanschelement übergreifende Rasthaken auf. Jeder Rasthaken besitzt einen einstückig angeformten, von der mindestens einen Auflagefläche axial abstehenden Hakensteg und eine von dem Hakensteg nach innen vorspringende Rastnase, die das Flanschelement auf der von der Auflagefläche abgekehrten Seite übergreift. Die Rasthaken legen einerseits das Flanschelement am Ventil fest und lassen andererseits bei der Montage von Kraftstoffverteiler und Ventil einen axialen Toleranzausgleich zwischen Flanschelement und Hinterschneidung am Anschlusskopf zu.

Gemäß einer vorteilhaften Ausführungsform der Erfindung besteht zwischen den Hakenstegen und dem Flanschelement ein das Flanschelement positionierender Formschluss. Dieser Formschluss sorgt für die positionsgenaue Ausrichtung des mindestens einen Gewindelochs im Flanschelement zu der mindestens einen Spannschraube am Kraftstoffverteiler.

Ventile zum Zumessen von Kraftstoff weisen üblicherweise ein Ventilgehäuse auf, das von einem endseitig in das Ventilgehäuse eingesetzten und mit diesem stoffschlüssig verbundenen Anschlussstück abgeschlossen ist. Das Anschlussstück weist eine Zulaufbohrung auf, die den Anschlussstutzen mit einem im Ventilgehäuse vorhandenen Fluidkanal verbindet, der seinerseits in eine einer Zumessöffnung des Ventils vorgelagerte Ventilkammer mündet. Der Anschlussstutzen ist dabei in einer ersten Bauart des Ventils als separates Bauteil in ein Sackloch im Anschlussstück eingesetzt und mittels einer Kunststoffumspritzung am Anschlussstück und Ventilgehäuse festgelegt. In einer zweiten Bauart des Ventils ist der Anschlussstutzen einstückig mit dem Anschlussstück ausgebildet.

Bei einer auf die erste Bauart des Ventils abgestimmten Ausführungsform der Erfindung ist das Flanschelement spiegelsymmetrisch zur Ventilachse ausgebildet und weist ein zentrales Durchtrittsloch für den Anschlussstutzen sowie zwei diametral angeordnete Gewindelöcher auf, wobei im Durchgangsloch eine an der Hinterschneidung des Anschlusskopfes angreifende Andruckfläche ausgeformt ist. Das Flanschelement wird bereits bei der Montage des Ventils mit einbezogen und auf den Anschlussstutzen aufgeschoben, bevor der Anschlussstutzen in das Anschlussstück eingesetzt und durch die Kunststoffumspritzung an Anschlussstück und Ventilgehäuse fixiert wird. Bei der Kunststoffumspritzung wird das Aufnahmeglied gleich mit angespritzt.

Bei einer auf die zweite Bauart des Ventils abgestimmten Ausführungsform der Erfindung ist das Flanschelement gabelförmig mit zwei den Anschlussstutzen übergreifenden Gabelarmen mit je einer an der Hinterschneidung des Anschlusskopfes angreifenden Andruckfläche und einem die Gabelarme miteinander verbindenden Gabelrücken mit einem eingearbeiteten Gewindeloch ausgebildet. Das Aufnahmeglied weist drei Auflagefläche für jeweils den Gabelrücken und je ein Ende der beiden Gabelarme sowie drei Rasthaken auf, von denen jeweils einer den Gabelrücken und ein Ende der beiden Gabelarme übergreift. Bei dieser konstruktiven Ausführung kann das Flanschelement nachträglich bei dem endmontierten Ventil auf den Anschlussstutzen aufgesetzt werden, bevor mittels der Kunststoffumspritzung das Aufnahmeglied hergestellt wird. Möglich ist auch, das Flanschelement in das durch Kunststoffumspritzung am endmontierten Ventil hergestellte Aufnahmeglied einzurasten oder einzuclipsen.

Gemäß einer vorteilhaften Ausführungsform der Erfindung bestehen die Sitzfläche an der Ventilöffnung und die Kopffläche am Anschlusskopf aus Metall. Eine solche, eine hohe Anpresskraft von Anschlusskopf und Sitzfläche erfordernde Metall-Metall-Verbindung ermöglicht eine Reduzierung der Kohlenwasserstoff-Emission im Abgas. Die hohe Anpresskraft wird durch die mindestens eine Spannschraube hergestellt.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Figur 1 ausschnittweise eine Vorrichtung zum Zumessen von Fluid,
Figur 2 eine Draufsicht eines in einem Aufnahmeglied aufgenommenen Flanschelements in der Vorrichtung gemäß Figur 1,
Figur 3 ausschnittweise einen Längsschnitt der Vorrichtung gemäß einem zweiten Ausführungsbeispiel,
Figur 4 eine Draufsicht eines in einem Aufnahmeglied einliegenden Flanschelements in der Vorrichtung gemäß Figur 3.

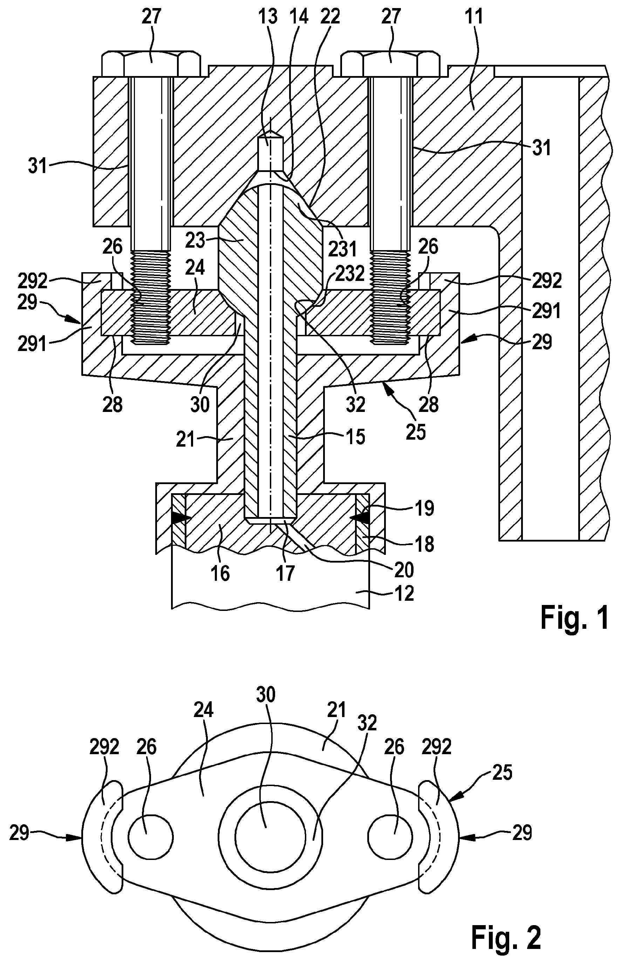

Die in Figur 1 ausschnittweise im Längsschnitt dargestellte Vorrichtung zum Zumessen von Kraftstoff wird z.B. zum Einspritzen von Kraftstoff in den Brennraum einer Brennkraftmaschine eingesetzt. Der Kraftstoff steht dabei unter einem sehr hohen Systemdruck. Die Vorrichtung weist einen Kraftstoffverteiler 11 und ein am Kraftstoffverteiler 11 angeschlossenes Ventil 12 zum Zumessen des Kraftstoffs auf. Der Kraftstoffverteiler 11 besitzt einen Strömungskanal 13 und mindestens eine mit dem Strömungskanal 13 in Verbindung stehende Abströmöffnung 14. Üblicherweise sind eine Mehrzahl von Abströmöffnungen 14 für mehrere Ventile 12 vorgesehen, wobei in Figur 1 der Übersichtlichkeit halber nur eine Abströmöffnung 14 dargestellt ist.

Das Ventil 12 weist einen Anschlussstutzen 15 zum Anschließen des Ventils 12 an die Abströmöffnung 14 auf. Der Anschlussstutzen 15 ist in ein in einem Anschlussstück 16 ausgebildetes Sackloch 17 formschlüssig eingesetzt. Das Anschlussstück 16 schließt ein Ventilgehäuse 18 endseitig fluiddicht ab und ist mit dem Ventilgehäuse 18 stoffschlüssig, hier durch eine angedeutete Schweißnaht 19, verbunden. Das Anschlussstück 16 weist eine Zulaufbohrung 20 auf, die das Sackloch 17 mit einem im Ventilgehäuse 18 verlaufenden, hier nicht dargestellten Kraftstoffkanal, verbindet. Der Kraftstoffkanal mündet seinerseits in eine einer Zumessöffnung des Ventils 12 vorgelagerten Ventilkammer. Der Anschlussstutzen 15 ist mittels einer Kraftstoffumspritzung 21 am Anschlussstück 16 und am Ventilgehäuse 18 festgelegt.

Zum Anschließen des oder der Ventile 12 an den Kraftstoffverteiler 11 sind jedem Ventil 12 Verbindungsmittel zugeordnet, die Kraftstoffverteiler 11 und Ventil 12 miteinander im Ansetzbereich von Anschlussstutzen 15 und Abströmöffnung 14 druckdicht verbinden. Die Verbindungsmittel weisen eine die Abströmöffnung 14 umschließende Sitzfläche 22, einen am Anschlussstutzen 15 einstückig angeformten Anschlusskopf 23, ein Flanschelement 24 und ein Aufnahmeglied 25 für das Flanschelement 24 auf. Der Anschlusskopf 23 besitzt eine der Sitzfläche 22 zugekehrte Kopffläche 231 und eine von der Kopffläche 231 abgekehrte Hinterschneidung 232. Das Flanschelement 24 greift an der Hinterscheidung 232 an und besitzt mindestens ein Gewindeloch 26 für eine am Kraftstoffverteiler 11 festgelegte Spannschraube 27. Das als Flachteil ausgebildete Flanschelement 24 ist im Aufnahmeglied 25 aufgenommen und liegt im Aufnahmeglied 25 formschlüssig mit zur Spannschraube 27 lagerrichtig positioniertem Gewindeloch 26 ein. Hierzu weist das Aufnahmeglied 25 mindestens eine Auflagefläche 28 für das Flanschelement 24 und mehrere das Flanschelement 24 übergreifende Rasthaken 29 auf. Jeder Rasthaken 29 besitzt einen Hakensteg 291, der axial von der Auflagefläche 28 absteht, und eine vom Hakensteg 291 radial nach innen vorspringende Rastnase 292, die das Flanschelement 24 auf der von der Auflagefläche 28 abgekehrten Seite randseitig übergreift. Das Aufnahmeglied 25 mit Auflageflächen 28 und Rasthaken 29 ist aus Kunststoff gespritzt und wird bei der Herstellung der Kunststoffumspritzung 21 am Anschlussstutzen 15 gleich mit angespritzt.

Im Ausführungsbeispiel der Figur 1 und 2 ist das Flanschelement 24 spiegelsymmetrisch zur Ventilachse ausgebildet und weist ein zentrales Durchtrittsloch 30 für den Anschlussstutzen 15 sowie zwei diametral angeordnete Gewindelöcher 26 auf. Eine im Durchtrittsloch 30 ausgeformte Andruckfläche 32 dient zur Anlage des Flanschelements 24 an der Hinterschneidung 232 am Anschlusskopf 23. Jeweils eine Spannschraube 27 ist durch ein Durchgangsloch 31 im Kraftstoffverteiler 11 hindurchgesteckt und in je einem der Gewindelöcher 26 verschraubt. Durch die Verschraubung presst das Flanschelement 24 über Andruckfläche 32 und Hinterschneidung 232 die Kopffläche 231 des Anschlusskopfes 23 auf die Sitzfläche 22 an der Abströmöffnung 14 und stellt durch die von den Spannschrauben 27 aufgebrachten hohen Spannkräfte eine Metall-Metall-Dichtung her, die hohen Dichtigkeitsanforderungen bei hohen Systemdrücken des Kraftstoffs genügt. Die Sitzfläche 22 hat dabei Konusform und die Kopffläche 231 des Anschlusskopfes 23 Kugelform. Dadurch, dass das Flanschelement 24 formschlüssig im Aufnahmeglied 25 positioniert ist, finden bei der Montage die Spannschrauben 27 "blind" die Gewindelöcher 26, so dass der Montagevorgang vereinfacht wird und automatisiert werden kann.

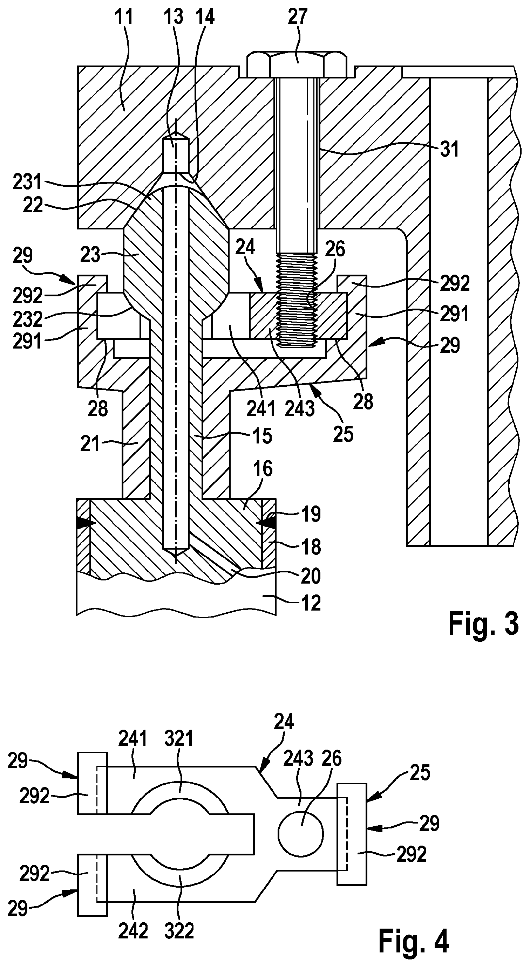

Bei dem in Figur 3 und 4 dargestellten Ausführungsbeispiel der Vorrichtung ist gegenüber der zuvor beschriebenen Ausführungsform das Flanschelement 24 modifiziert. Die übrigen Bauteile stimmen mit denen in Figur 1 überein, so dass gleiche Bauteile mit gleichen Bezugszeichen versehen sind. Das wiederum als Flachteil ausgeführte Flanschelement 24 ist gabelförmig ausgebildet und weist zwei den Anschlussstutzen 15 umgreifende Gabelarme 241, 242 und einen die Gabelarme 241, 242 miteinander verbindenden Gabelrücken 243 auf. In jedem Gabelarm 241, 142 ist eine mit der Hinterschneidung 232 am Anschlusskopf 23 korrespondierende Andruckfläche 321 bzw. 322 ausgeformt, und in den Gabelrücken 243 ist das Gewindeloch 26 für die Spannschraube 27 eingearbeitet. Das Aufnahmeglied 23 weist drei Auflagefläche 28 für jeweils den Gabelrücken 243, das eine Ende des Gabelarms 241 und das andere Ende des Gabelarms 242 sowie drei Rasthaken 29 auf, die in gleicher Weise wie in Figur 1 und 3 ausgebildet sind. Die Hakenstege 291 der drei Rasthaken 29 stehen wiederum axial von je einer Auflagefläche 28 ab, und die radial von den Hakenstegen 291 nach innen vorspringenden Rastnasen 292 übergreifen randseitig das Flanschelement 24, wobei jeweils eine Rastnase 292 den Gabelrücken 243, eine Rastnase 292 das Ende des Gabelarms 242 und eine Rastnase 292 das Ende des Gabelarms 241 übergreift. Das Aufnahmeglied 25 mit Auflageflächen 28 und Rasthaken 29 ist einstückig bei der Kunststoffumspritzung 21 an den Anschlussstutzen 15 mit angespritzt. Das Flanschelement 24 ist in das Aufnahmeglied 23 nachträglich eingerastet oder wird bei der Herstellung der Kunststoffumspritzung 21 mit in die Spritzform eingelegt. Der Anschlussstutzen 15 ist einstückig mit dem Anschlussstück 16 ausgeführt, so dass bei der Herstellung der Kunststoffumspritzung 21 das Ventil 12 einschließlich Anschlussstutzen 15 bereits komplett montiert ist.

## Patentansprüche

1. Vorrichtung zum Zumessen von Kraftstoff in Brennkraftmaschinen, mit einem Kraftstoffverteiler (11), der einen Strömungskanal (13) und mindestens eine mit dem Strömungskanal (13) in Verbindung stehende Abströmöffnung (14) aufweist, mit mindestens einem am Kraftstoffverteiler (11) angeschlossenen Ventil (12) zum Zumessen des Kraftstoffs, das einen Anschlussstutzen (15) zum Ansetzen an die Abströmöffnung (14) aufweist, und mit Kraftstoffverteiler (11) und Ventil (12) miteinander im Ansetzbereich von Anschlussstutzen (15) und Abströmöffnung (14) druckdicht verbindenden Verbindungsmitteln, **dadurch gekennzeichnet, dass** die Verbindungsmittel eine die Abströmöffnung (14) umschließende Sitzfläche (22), einen am Anschlussstutzen (15) ausgebildeten Anschlusskopf (23) mit einer auf die Sitzfläche (22) sich auflegenden Kopffläche (231) und einer Hinterschneidung (232), ein an der Hinterschneidung (232) angreifendes Flanschelement (24) mit mindestens einem Gewindeloch (26) für eine am Kraftstoffverteiler (11) festgelegte Spannschraube (27) und ein am Ventil (12) festgelegtes Aufnahmeglied (25) aufweisen, in dem das Flanschelement (24) formschlüssig mit zur Spannschraube (27) lagerichtig positioniertem Gewindeloch (26) einliegt.

2. Vorrichtung nach Anspruch 1, **dadurch gekennzeichnet, dass** das Flanschelement (24) in das Aufnahmeglied (25) eingerastet ist.

3. Vorrichtung nach Anspruch 2, **dadurch gekennzeichnet, dass** das Flanschelement (24) ein Flachteil ist und das Aufnahmeglied (25) mindestens eine Auflagefläche (28) für das Flanschelement (24) und mehrere das Flanschelement (24) übergreifende Rasthaken (29) mit von der mindestens einen Auflagefläche (28) axial abstehenden Hakenstegen (291) und von den Hakenstegen (291) radial nach innen vorspringenden Rastnasen (292) aufweist.

4. Vorrichtung nach Anspruch 3, **dadurch gekennzeichnet, dass** zwischen den Hakenstegen (291) und dem Flanschelement (24) ein das Flanschelement (24) positionierender Formschluss besteht.

5. Vorrichtung nach Anspruch 3 oder 4, **dadurch gekennzeichnet, dass** das Flanschelement (24) spiegelsymmetrisch zur Ventilachse ausgebildet ist, und zwei diametral angeordnete Auflageflächen (28) und ein zentrales Durchtrittsloch (30) für den Anschlussstutzen (15) mit einer im Durchtrittsloch (30) ausgeformten, mit der Hinterschneidung (232) am Anschlusskopf (23) korrespondierenden Andruckfläche (32) sowie zwei diametral angeordnete Gewindelöcher (26) aufweist.

6. Vorrichtung nach Anspruch 3 oder 4, **dadurch gekennzeichnet, dass** das Flanschelement (24) gabelförmig mit zwei den Anschlussstutzen (15) umgreifenden, mit je einer Andruckfläche (321, 322) an der Hinterschneidung (232) des Anschlusskopfes (23) angreifenden Gabelarmen (241, 242) und einem die Gabelarme (241, 242) miteinander verbindenden Gabelrücken (243) mit eingearbeitetem Gewindeloch (26) ausgebildet ist und das Aufnahmeglied (25) drei Auflagefläche (28) für jeweils den Gabelrücken (243) und ein Ende der beiden Gabelarme (241, 242) sowie drei Rasthaken (29) aufweist, von denen jeweils ein Rasthaken (29) den Gabelrücken (243) und ein Ende der beiden Gabelarme (241, 242) übergreift.

7. Vorrichtung nach einem der Ansprüche 1 bis 6, **dadurch gekennzeichnet, dass** das Aufnahmeglied (25) durch eine an das Ventil (12) angespritzte Kunststoffumspritzung (21) gebildet ist.

8. Vorrichtung nach einem der Ansprüche 1 bis 7, **dadurch gekennzeichnet, dass** die die Sitzfläche (22) an der Abströmöffnung (14) Konusform und die Kopffläche (231) am Anschlusskopf (23) Kugelform aufweist.

9. Vorrichtung nach einem der Ansprüche 1 bis 8, **dadurch gekennzeichnet, dass** Sitzfläche (22) und Kopffläche (231) aus Metall bestehen.

## Claims

1. Device for metering fuel into internal combustion engines, having a fuel distributor (11) which has a flow duct (13) and at least one outflow opening (14) which is connected to the flow duct (13), having at least one valve (12) which is connected to the fuel distributor (11) and which serves for metering the fuel, which valve has an attachment connector (15) for mounting onto the outflow opening (14), and having connecting means which connect the fuel distributor (11) and valve (12) to one another in pressure-tight fashion in the mounting region of attachment connector (15) and outflow opening (14), **characterized in that** the connecting means have a seat surface (22) surrounding the outflow opening (14), have an attachment head (23) which is formed on the attachment connector (15) and has a head surface (231) lying on the seat surface (22) and has an undercut (232), have a flange element (24) engaging on the undercut (232), which flange element has at least one threaded hole (26) for a clamping screw (27) fixed to the fuel distributor (11), and have a receiving element (25) fixed to the valve (12), in which receiving element the flange element (24) lies with a form fit with the threaded hole (26) positioned correctly with respect to the clamping screw (27).

2. Device according to Claim 1, **characterized in that** the flange element (24) is engaged with detent action into the receiving element (25).

3. Device according to Claim 2, **characterized in that** the flange element (24) is a flat part, and the receiving element (25) has at least one support surface (28) for the flange element (24) and has multiple detent hooks (29), which detent hooks engage over the flange element (24) and have webs (291) protruding axially from the at least one support surface (28) and have detent lugs (292) protruding radially inwardly from the hook webs (291).

4. Device according to Claim 3, **characterized in that**, between the hook webs (291) and the flange element (24), there is a form fit which serves for positioning the flange element (24).

5. Device according to Claim 3 or 4, **characterized in that** the flange element (24) is of mirror-symmetrical form with respect to the valve axis, has two diametrically arranged support surfaces (28), has a central passage hole (30) for the attachment connector (15), with a pressure-exerting surface (32) formed in the passage hole (30) and corresponding with the undercut (232) on the attachment head (23), and has two diametrically arranged threaded holes (26).

6. Device according to Claim 3 or 4, **characterized in that** the flange element (24) is of fork-shaped form with two fork arms (241, 242), which engage around the attachment connector (15) and which engage by way of in each case one pressure-exerting surface (321, 322) on the undercut (232) of the attachment head (23), and with a fork rear section (243), which connects the fork arms (241, 242) to one another and which has a threaded hole (26) formed therein, and the receiving element (25) has three support surfaces (28) for in each case the fork rear section (243) and one end of the two fork arms (241, 242), and has three detent hooks (29), of which in each case one detent hook (29) engages over the fork rear section (243) and one end of the two fork arms (241, 242).

7. Device according to one of Claims 1 to 6, **characterized in that** the receiving element (25) is formed by a plastics encapsulation (21) injection-moulded onto the valve (12).

8. Device according to one of Claims 1 to 7, **characterized in that** the seat surface (22) on the outflow opening (14) has a conical shape, and the head surface (231) on the attachment head (23) has a spherical shape.

9. Device according to one of Claims 1 to 8, **characterized in that** seat surface (22) and head surface (231) are composed of metal.

## Revendications

1. Dispositif de dosage de carburant dans des moteurs à combustion interne, comprenant un distributeur de carburant (11) qui présente un canal d'écoulement (13) et au moins une ouverture de sortie (14) en liaison avec le canal d'écoulement (13), au moins une soupape (12) raccordée au distributeur de carburant (11) pour le dosage de carburant, qui présente une tubulure de raccordement (15) destinée à être placée au niveau de l'ouverture de sortie (14), et des moyens de liaison reliant l'un à l'autre de manière étanche à la pression le distributeur de carburant (11) et la soupape (12) dans la région d'application de la tubulure de raccordement (15) et de l'ouverture de sortie (14), **caractérisé en ce que** les moyens de liaison présentent une surface de siège (22) entourant l'ouverture de sortie (14), une tête de raccordement (23) réalisée sur la tubulure de raccordement (15), avec une surface de tête (231) s'appliquant sur la surface de siège (22), et avec une contre-dépouille (232), un élément de bride (24) venant en prise sur la contre-dépouille (232) avec au moins un trou fileté (26) pour une vis de serrage (27) fixée au distributeur de carburant (11) et un organe de réception (25) fixé sur la soupape (12), dans lequel l'élément de bride (24) s'insère par engagement par correspondance de formes avec le trou fileté (26) positionné en position exacte par rapport à la vis de serrage (27).

2. Dispositif selon la revendication 1, **caractérisé en ce que** l'élément de bride (24) est encliqueté dans l'organe de réception (25).

3. Dispositif selon la revendication 2, **caractérisé en ce que** l'élément de bride (24) est une partie plate et l'organe de réception (25) présente au moins une surface d'appui (28) pour l'élément de bride (24) et plusieurs croches d'encliquetage (29) venant en prise par le dessus avec l'élément de bride (24), avec des nervures de crochet (291) saillant axialement depuis l'au moins une surface d'appui (28) et des ergots d'encliquetage (292) saillant radialement vers l'intérieur depuis les nervures de crochet (291).

4. Dispositif selon la revendication 3, **caractérisé en ce qu'**entre les nervures de crochet (291) et l'élément de bride (24) existe un engagement par correspondance de formes positionnant l'élément de bride (24).

5. Dispositif selon la revendication 3 ou 4, **caractérisé en ce que** l'élément de bride (24) est réalisé avec une symétrie spéculaire par rapport à l'axe de soupape, et présente deux surfaces d'appui (28) disposées diamétralement, et un trou de passage central (30) pour la tubulure de raccordement (15) avec une surface de pression (32) formée dans le trou de passage (30), correspondant à la contre-dépouille (232) au niveau de la tête de raccordement (23), ainsi que deux trous filetés (26) disposés diamétralement.

6. Dispositif selon la revendication 3 ou 4, **caractérisé en ce que** l'élément de bride (24) est réalisé en forme de fourche avec deux bras de fourche (241, 242) venant en prise autour de la tubulure de raccordement (15), s'engageant par une surface de pression respective (321, 322) au niveau de la contre-dépouille (232) de la tête de raccordement (23), et une âme de fourche (243), avec un trou fileté (26) pratiqué dans celle-ci, reliant l'un à l'autre les bras de fourche (241, 242), et l'organe de réception (25) présente trois surfaces d'appui (28) à chaque fois pour l'âme de fourche (243) et une extrémité des deux bras de fourche (241, 242) ainsi que trois crochets d'encliquetage (29), dont à chaque fois un crochet d'encliquetage (29) vient en prise par-dessus l'âme de fourche (243) et une extrémité des deux bras de fourche (241, 242).

7. Dispositif selon l'une quelconque des revendications 1 à 6, **caractérisé en ce que** l'organe de réception (25) est formé par un surmoulage de plastique (21) pulvérisé sur la soupape (12).

8. Dispositif selon l'une quelconque des revendications 1 à 7, **caractérisé en ce que** la surface de siège (22) au niveau de l'ouverture de sortie (14) présente une forme conique et la surface de tête (231) au niveau de la tête de raccordement (23) présente une forme sphérique.

9. Dispositif selon l'une quelconque des revendications 1 à 8, **caractérisé en ce que** la surface de siège (22) et la surface de tête (231) se composent de métal.
